# FASCICULE DE BREVET EUROPEEN

(11) **EP 4 133 187 B1**
(45) Date de publication et mention de la délivrance du brevet: **19.08.2026**
(21) Numéro de dépôt: 21726144.5
(22) Date de dépôt: 09.04.2021
(51) Int. Cl.: F16B 25/00, F16B 35/04

(54) **ELÉMENT DE FIXATION AMÉLIORÉ**
VERBESSERTES BEFESTIGUNGSELEMENT
IMPROVED FIXING ELEMENT

(30) Priorité: 09.04.2020 FR 2003580
(43) Date de publication de la demande: 15.02.2023
(73) Titulaire: LE CLOU S.V.A., 05100 Briancon (FR)
(72) Inventeur: CAVALLARO, Laurent, 05100 BRIANCON (FR)
(74) Mandataire: Cabinet Beau de Loménie
(86) Numéro de dépôt international: PCT/FR2021/050629
(87) Numéro de publication internationale: WO 2021/205129

(56) Documents cités:
- EP-A1- 1 141 486
- EP-A2- 0 921 252
- DE-A1- 2 156 270
- FR-A1- 3 073 262

## Description

### Domaine Technique

Le présent exposé concerne un élément de fixation pour des équipements destinés à être fixés sur des arbres.

### Technique antérieure

Les structures de type parcours aventure ou accrobranche sont des structures communément réalisées en pleine nature, dans des arbres, typiquement en hauteur.

Une problématique liée à de telles structures concerne la fixation des différents éléments dans les arbres, pour répondre aux exigences sécuritaires sans dégrader les arbres. On comprend en effet que des fixations venant dégrader les arbres seraient en parfaite contradiction avec le principe même de telles structures, et viendraient également compromettre la robustesse de l'ensemble sur la durée. Le document EP0921252 A2 présente un exemple d'élément de fixation connu.

Le présent exposé vise ainsi à proposer un système de fixation répondant au moins partiellement à ces problématiques.

### Exposé de l'invention

A cet effet, le présent exposé concerne un élément de fixation adapté pour être partiellement inséré dans un arbre, tel que revendiqué dans la revendication 1, et comprenant un corps s'étendant selon une direction longitudinale définie par un axe longitudinal, ledit corps comprenant successivement, depuis une extrémité proximale vers une extrémité distale selon la direction longitudinale :
- une première portion filetée, adaptée pour être insérée dans un tronc d'arbre,
- un collet,
- un écrou,
- une seconde portion filetée,
   dans lequel
- la première portion filetée et la seconde portion filetée présentent des diamètres maximums D1 et D2 respectivement par rapport à l'axe longitudinal,
- le collet présente une forme cylindrique de révolution de diamètre D3 selon l'axe longitudinal, tel que D3 > 1,3 D1, et D3 > 1,3 D2, et une longueur Lc selon la direction longitudinale comprise entre 30 mm et 90 mm,
- l'écrou présente une section selon un plan perpendiculaire à l'axe longitudinal inscrite dans un polygone régulier, ledit polygone régulier étant inscrit dans un cercle de diamètre D4, tel que D4 < D3, et D4 > D2,
- ledit élément de fixation étant réalisé en une seule pièce.

Selon un exemple, les diamètres D1 et D3 sont compris entre 15 et 40 mm.

Selon un exemple, l'élément de fixation comprend une première portion de transition interposée entre la première portion filetée et le collet, la première portion de transition formant un congé.

Selon un exemple, l'élément de fixation comprend une seconde portion de transition interposée entre l'écrou et la seconde portion filetée, la seconde portion de transition formant un congé.

Selon un exemple, les diamètres D3 et D4 sont tels que D4 < 0,8 D3.

Selon un exemple, la première portion filetée présente un filetage de type bois, avec un fond de filet de 16, 17 ou 20 mm, un haut de filet de 22, 24 ou 27 mm, et un pas de 6, 8 ou 9 mm.

Selon un exemple, la seconde portion filetée présente un filetage de type M22-ISO.

Selon un exemple, l'élément de fixation est formé en acier ou en acier inoxydable, par exemple en acier inoxydable 303/304 ou en acier galvanisé, ou en acier s355 avec une résistance à la rupture en traction (Rm) supérieure ou égale à 500 MPa.

Selon un exemple, le collet comprend une rainure s'étendant sur sa périphérie, la rainure s'étendant à une distance d'une extrémité proximale du collet comprise entre 0,2 et 0,5 Lc, où Lc est la longueur du collet mesurée selon l'axe longitudinal (X-X).

Selon un exemple, l'écrou présente une section selon un plan perpendiculaire à l'axe longitudinal définissant un polygone régulier dont les sommets ont été tronqués.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente un exemple d'élément de fixation selon un aspect de la présente invention.
[Fig. 2] La figure 2 présente un autre exemple d'élément de fixation, pas revendiqué.
[Fig. 3] La figure 3 présente un autre exemple d'élément de fixation, pas revendiqué.

Sur l'ensemble des figures, les éléments en commun sont repérés par des références numériques identiques.

### Description des modes de réalisation

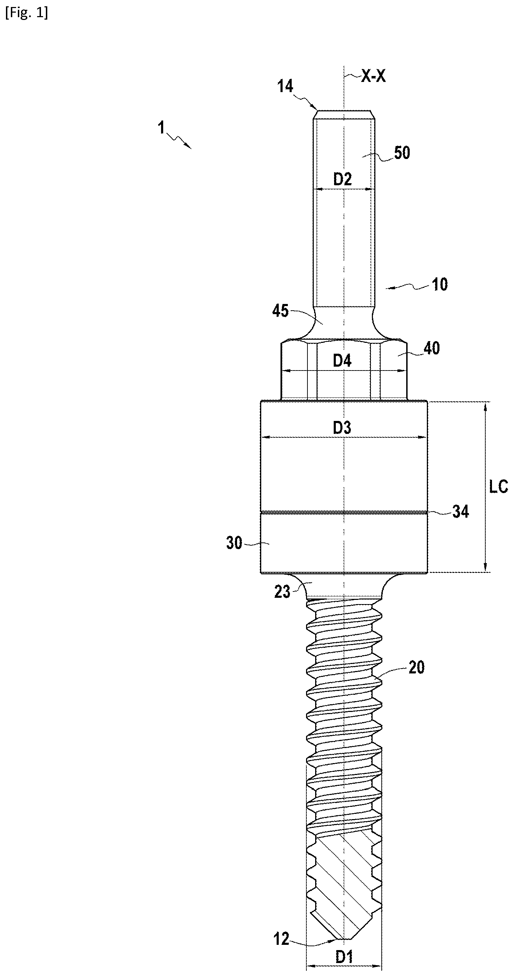

La figure 1 présente un exemple d'élément de fixation 1 selon un aspect de la présente invention.

L'élément de fixation 1 présente un corps 10 s'étendant selon une direction longitudinale définie par un axe longitudinal X-X. Dans la description qui suit, les éléments s'étendant axialement seront compris comme étant des éléments s'étendant selon l'axe longitudinal X-X, et les éléments s'étendant radialement seront compris comme étant des éléments s'étendant radialement par rapport à l'axe longitudinal X-X.

On définit de manière arbitraire pour le corps 10 une extrémité proximale 12 et une extrémité distale 14 selon l'axe longitudinal X-X, ces désignations étant purement arbitraires. Les extrémités proximales et distales des différents éléments seront par la suite définies par rapport à ces deux extrémités du corps 10.

L'élément de fixation 1 comprend successivement, depuis son extrémité proximale 12 vers son extrémité distale 14, une première portion filetée 20, un collet 30, un écrou 40 et une seconde portion filetée 50.

De manière optionnelle, l'élément de fixation 1 comprend une première portion de transition 23 interposée entre la première portion filetée 20 et le collet 30.

De manière optionnelle, l'élément de fixation 1 comprend une seconde portion de transition 45 interposée entre l'écrou 40 et la seconde portion filetée 50.

La première portion filetée 20 comprend un filetage adapté pour permettre son insertion dans un matériau de type bois, typiquement dans un tronc d'arbre. Le filetage réalisé sur la première portion filetée présente typiquement un diamètre maximum de 27mm, des filets trapézoïdaux avec un angle de 60°, un sommet de filet de 1,5 mm, et un pas de 8mm. La première portion filetée 20 présente typiquement un filetage de type bois, avec un fond de filet de 16, 17 ou 20 mm, et un haut de filet de 22, 24 ou 27 mm, et un pas de 6, 8 ou 9 mm.

La première portion filetée 20 présente un diamètre maximum D1 par rapport à l'axe longitudinal X-X, ce diamètre correspondant typiquement au diamètre d'un cylindre de révolution tangent aux sommets des filets de la première portion filetée 20.

Une extrémité de la première portion filetée 20, formant l'extrémité proximale 12 du corps 10 de l'élément de fixation 1 peut typiquement former une pointe, de manière à faciliter sa pénétration dans un arbre, ou peut être en forme de pointe tronquée.

La première portion filetée 20 présente typiquement une longueur selon la direction axiale comprise entre 90 mm et 160 mm, par exemple entre 100 mm et 140 mm, ou plus précisément entre 110 et 135 mm.

Le collet 30 présente une forme cylindrique de révolution de diamètre D3 autour de l'axe longitudinal X-X. Le collet 30 présente un diamètre D3 est strictement supérieur à D1, tel que D3 > 1,3 D1, ou encore D3 > 1,5 D1. Le diamètre D3 est typiquement compris entre 40 mm et 80 mm, ou encore entre 50 mm et 70 mm, ou plus précisément entre 55 mm et 65 mm, ou par exemple égal à 60 mm.

Le collet 30 présente typiquement une longueur Lc selon la direction axiale, typiquement comprise entre 30 mm et 90 mm, ou par exemple entre 40 mm et 80 mm, ou encore entre 50 mm et 70 mm, ou par exemple entre 55 mm et 65 mm, par exemple égale à 62 mm.

Une rainure 34 ou gorge est typiquement formée dans le collet 30. La rainure 34 présente typiquement une profondeur mesurée selon la direction radiale comprise entre 1 mm et 5 mm, et une longueur mesurée selon la direction axiale comprise entre 1 mm et 5 mm.

La rainure 34 a notamment une fonction de repère pour un utilisateur, comme on le décrira par la suite.

La rainure 34 est typiquement formée à une distance d'une extrémité proximale du collet 30 comprise entre 0,2 et 0,5 Lc, ou typiquement comprise entre 0,25 et 0,35 Lc.

L'écrou 40 présente typiquement une section selon un plan perpendiculaire à l'axe longitudinal X-X définissant un polygone régulier, par exemple un hexagone régulier, ledit polygone régulier étant typiquement inscrit dans un cercle de diamètre D4, tel que D4 < D3. Le diamètre D4 est typiquement compris entre 30 mm et 50mm, par exemple compris entre 35 mm et 45 mm.

Selon un exemple, ledit polygone régulier présente des arrêtes tronquées.

L'écrou 40 présente typiquement une longueur L40 selon la direction axiale comprise entre 10 mm et 30 mm, ou encore entre 15 mm et 25 mm, ou par exemple entre 20 mm et 25 mm.

La seconde portion filetée 50 présente un diamètre maximum D2 par rapport à l'axe longitudinal X-X, ce diamètre correspondant typiquement au diamètre d'un cylindre de révolution tangent aux sommets des filets de la seconde portion filetée 50. Le diamètre D2 est tel que D4 > D2, et tel que D3 > 1,3 D2, ou encore D3 > 1,5 D2.

La seconde portion filetée 50 présente typiquement un filetage de type M22-ISO.

La seconde portion filetée 50 présente typiquement une longueur L50 mesurée selon la direction axiale comprise entre 60 mm et 100 mm, ou encore entre 60 mm et 80 mm.

La seconde portion filetée 50 présente typiquement une extrémité distale sur laquelle est réalisé un chanfrein, cette extrémité distale de la seconde portion filetée 50 formant l'extrémité distale 12 du corps 10 de l'élément de fixation 4. Le chanfrein ainsi réalisé présente typiquement un angle de 30° par rapport à la direction axiale, et s'étend sur une longueur comprise entre 2 mm et 4 mm, ou par exemple égale à 3 mm selon la direction axiale.

Comme indiqué précédemment, l'élément de fixation 1 comprend de manière optionnelle une première portion de transition 23 interposée entre la première portion filetée 20 et le collet 30. Cette première portion de raccord forme un congé, typiquement avec un rayon compris entre 5 mm et 10 mm, depuis le diamètre D1 de la première portion filetée 20.

Une telle première portion de transition 23 formant un congé entre la première portion filetée 20 et le collet 30 permet d'améliorer la tenue mécanique de l'élément de fixation 1, en évitant la formation d'amorces de rupture entre ces deux régions ayant des diamètres distincts.

Comme indiqué précédemment, l'élément de fixation 1 comprend de manière optionnelle une seconde portion de transition 45 interposée entre l'écrou 40 et la seconde portion filetée 50. Cette première portion de raccord forme un congé, typiquement avec un rayon compris entre 5 mm et 10 mm, depuis le diamètre D2 de la seconde portion filetée 50.

Une telle seconde portion de transition 45 formant un congé entre l'écrou 40 et la seconde portion filetée 50 permet d'améliorer la tenue mécanique de l'élément de fixation 1, en évitant la formation d'amorces de rupture entre ces deux régions ayant des diamètres distincts.

De manière optionnelle, un congé peut également être formé entre le collet 30 et l'écrou 40, typiquement avec un rayon compris entre 1 mm et 3 mm.

On décrit à présent les fonctions et l'utilisation de l'élément de fixation 1 tel que présenté.

L'élément de fixation 1 est adapté pour être inséré dans un arbre, par exemple pour le soutien d'une structure ou d'un équipement.

La première portion filetée 20 est insérée dans un arbre, par vissage, notamment au moyen d'un outil engageant l'écrou 40.

L'élément de fixation 1 est ainsi inséré dans l'arbre jusqu'à ce que le collet 30 soit au moins partiellement inséré dans l'arbre. Le collet 30 est typiquement inséré dans l'arbre jusqu'au niveau de la rainure 34, qui forme le cas échéant un repère visuel pour l'utilisateur.

Afin de faciliter l'insertion, un pré-perçage est typiquement réalisé au préalable dans le tronc de l'arbre, au moyen d'un foret ayant deux sections distinctes ; une première section ayant un diamètre strictement inférieur à D1 et formant un pré-perçage pour la première portion filetée 20, et une seconde section ayant un diamètre égal à D3, pour former un logement recevant le collet 30.

Ainsi, l'écrou 40, la seconde portion filetée 50, et le cas échéant une portion du collet 30 demeurent à l'extérieur du tronc de l'arbre. Le fait de maintenir une portion du collet 30 à l'extérieur du tronc de l'arbre permet de prendre en compte une croissance de l'arbre, et donc une augmentation de son diamètre, qui vient ainsi progressivement recouvrir le reste du collet 30, tout en maintenant l'écrou 40 accessible afin de permettre un éventuel retrait de l'élément de fixation 1.

On comprend également que le positionnement de l'écrou 40 et le cas échéant de la seconde portion de transition 45 permet d'assurer un espacement entre le tronc d'arbre dans lequel l'élément de fixation 1 est inséré, et une structure ou un équipement associé à l'élément de fixation 1, ce qui permet ainsi de ménager un espace pour la croissance de l'arbre.

La seconde portion filetée 50 est ainsi employée pour associer une structure ou un équipement à l'élément de fixation 1, et donc pour fixer cette structure ou cet équipement à l'arbre.

Lors de l'utilisation, l'élément de fixation 1 va assurer un maintien amélioré de l'équipement ou de la structure auquel il est associé. La première portion filetée 20 insérée dans l'arbre va assurer une résistance à l'arrachement. Le collet 30 qui est au moins partiellement inséré dans l'arbre va quant à lui assurer une bonne tenue au cisaillement, et éviter un phénomène d'agrandissement du trou formé dans l'arbre sous l'effet d'effort de cisaillement.

L'élément de fixation 1 tel que proposé permet ainsi non seulement d'améliorer la tenue mécanique de la fixation réalisée dans un arbre, mais également d'empêcher d'éventuelles dégradations de l'arbre sous l'effet d'un effort de cisaillement appliqué à l'élément de fixation 1, cet effet étant ici annulé par la présence du collet 30.

L'élément de fixation 1 tel que proposé permet de réaliser une fixation robuste, sans nécessiter l'emploi de sangles ou d'autres éléments venant entourer le tronc de l'arbre, qui viennent le dégrader au fil du temps.

L'élément de fixation étant un élément mécanique en une seule pièce, il ne nécessite par ailleurs pas d'opérations de maintenance, et est ainsi particulièrement avantageux en termes d'exploitation.

L'élément de fixation 1 est typiquement formé en acier ou en acier inoxydable, par exemple en acier inoxydable 303/304 ou en acier galvanisé avec une limite d'élasticité supérieure ou égale à 500 MPa, par exemple en acier s355 avec une résistance à la rupture en traction (Rm) supérieure ou égale à 500 MPa.

Selon une variante non représentée, l'écrou 40 est formé non pas entre le collet 30 et la seconde portion filetée 50, mais à l'extrémité distale de la seconde portion filtrée 50, de manière à ce que l'extrémité distale du corps 10 de l'élément de fixation 1 soit formée par un écrou. Cet écrou a alors typiquement une section de polygone inscrit dans un cercle de diamètre D6 tel que D6 < D2. Le positionnement de l'écrou 40 entre le collet 30 et la seconde portion filtrée 50 permet cependant de limiter les contraintes appliquées au corps 10 de l'élément de fixation 1 lors du vissage dans un tronc d'arbre, et également de former un limite maximale pour l'insertion de l'élément de fixation 1 dans un tronc d'arbre.

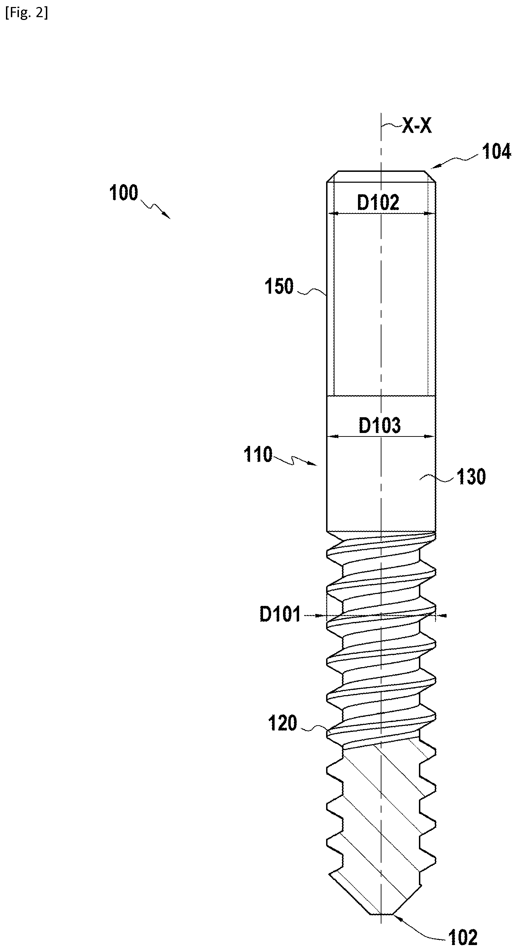

La figure 2 présente un autre exemple d'élément de fixation 100, pouvant notamment être employé conjointement à l'élément de fixation 1 tel que présenté précédemment.

Cet autre exemple d'élément de fixation 100 comprend un corps 110 s'étendant selon une direction longitudinale définie par un axe longitudinal X-X. Dans la description qui suit, les éléments s'étendant axialement seront compris comme étant des éléments s'étendant selon l'axe longitudinal X-X, et les éléments s'étendant radialement seront compris comme étant des éléments s'étendant radialement par rapport à l'axe longitudinal X-X.

On définit de manière arbitraire pour le corps 110 une extrémité proximale 102 et une extrémité distale 104 selon l'axe longitudinal X-X, ces désignations étant purement arbitraires. Les extrémités proximales et distales des différents éléments seront par la suite définies par rapport à ces deux extrémités du corps 10.

L'élément de fixation 100 comprend successivement, depuis son extrémité proximale 102 vers son extrémité distale 104, une première portion filetée 120, une portion centrale 130, et une seconde portion filetée 150.

La première portion filetée 120 est similaire ou identique à la première portion filetée 20 déjà décrite en référence à la figure 1.

La première portion filetée 120 comprend un filetage adapté pour permettre son insertion dans un matériau de type bois, typiquement dans un tronc d'arbre. Le filetage réalisé sur la première portion filetée présente typiquement un diamètre maximum de 24mm, des filets trapézoïdaux avec un angle de 60°, un sommet de filet de 1,5 mm, et un pas de 8mm. La première portion filetée 120 présente un filetage de type bois, avec un fond de filet de 16, 17 ou 20 mm, et un haut de filet de 22, 24 ou 27 mm, et un pas de 6, 8 ou 9 mm.

La première portion filetée 120 présente un diamètre maximum D101 par rapport à l'axe longitudinal X-X, ce diamètre correspondant typiquement au diamètre d'un cylindre de révolution tangent aux sommets des filets de la première portion filetée 120. Le diamètre D101 est typiquement égal à 24 mm, ou plus généralement compris entre 20 mm et 30 mm, ou par exemple entre 22 mm et 26 mm.

Une extrémité de la première portion filetée 120, formant l'extrémité proximale 102 du corps 110 de l'élément de fixation 1 peut typiquement former une pointe, de manière à faciliter sa pénétration dans un arbre, ou peut être en forme de pointe tronquée.

La première portion filetée 120 présente typiquement une longueur selon la direction axiale comprise entre 60 mm et 120 mm, par exemple entre 70 mm et 110 mm, ou plus précisément entre 75 et 100 mm, ou encore entre 80 mm et 90 mm, ou par exemple égale à 85 mm.

La portion centrale 130 est typiquement une portion ayant une forme de cylindre de révolution de diamètre D103 autour de l'axe longitudinal X-X.

Le diamètre D103 est typiquement égal à D101.

La seconde portion filetée 150 présente un diamètre maximum D102 par rapport à l'axe longitudinal X-X, ce diamètre correspondant typiquement au diamètre d'un cylindre de révolution tangent aux sommets des filets de la seconde portion filetée 150. Le diamètre D102 est typiquement égal à D101 et à D103.

La seconde portion filetée 150 présente typiquement un filetage de type M24-ISO.

La seconde portion filetée 150 présente typiquement une longueur L150 mesurée selon la direction axiale comprise entre 30 mm et 80 mm, ou encore entre 40 mm et 60 mm, par exemple égale à 50 mm.

La seconde portion filetée 150 présente typiquement une extrémité distale sur laquelle est réalisé un chanfrein, cette extrémité distale de la seconde portion filetée 50 formant l'extrémité distale 12 du corps 10 de l'élément de fixation 4. Le chanfrein ainsi réalisé présente typiquement un angle de 30° par rapport à la direction axiale, et s'étend sur une longueur comprise entre 2 mm et 4 mm, ou par exemple égale à 3 mm selon la direction axiale.

L'élément de fixation 100 ainsi représenté sur la figure 2 peut notamment être employé en complément de l'élément de fixation 1 tel que déjà décrit en référence à la figure 1, notamment dans les cas où l'arbre dans lequel il est inséré se dégrade ou dépérit.

La présente d'une portion centrale 130 cylindrique de révolution, et donc dépourvue de filetage, permet d'assurer un espacement entre le tronc de l'arbre et les structures ou équipements fixés au moyen de l'élément de fixation 100.

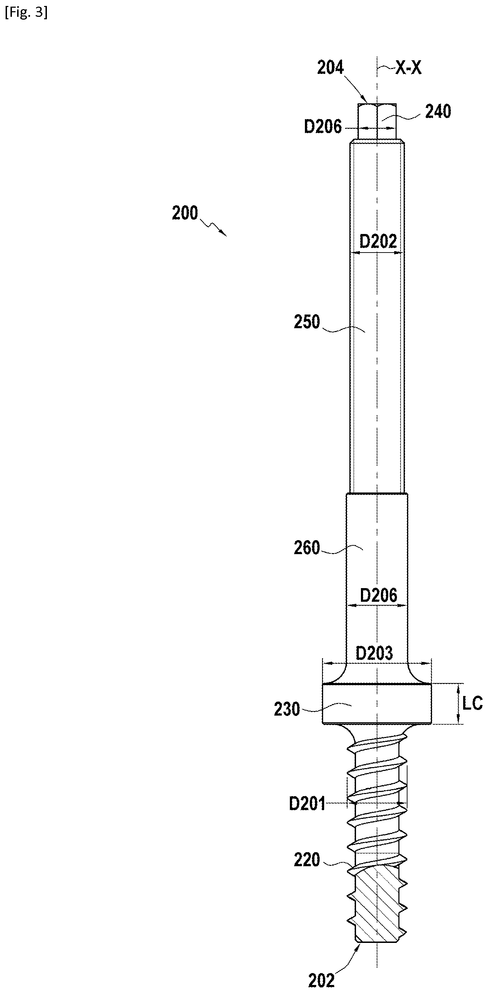

La figure 3 présente un autre exemple d'élément de fixation 200. Les différentes parties de l'élément de fixation 200 sont ici désignées de la même manière que pour l'élément de fixation déjà décrit en référence à la figure 1, les références numériques étant incrémentées de 200. On décrit ci-après les différentes parties de l'élément de fixation, depuis une extrémité proximale 202 vers une extrémité distale 204 selon l'axe longitudinal X-X.

La première portion filetée 220 est similaire ou identique à la première portion filetée 20 déjà décrite en référence à la figure 1.

La première portion filetée 220 comprend un filetage adapté pour permettre son insertion dans un matériau de type bois, typiquement dans un tronc d'arbre. Le filetage réalisé sur la première portion filetée présente typiquement un diamètre maximum de 22mm, des filets triangulaires avec un angle de 60°, une hauteur de filet de 3mm, et un pas de 9mm. La première portion filetée 220 présente un filetage de type bois, avec un fond de filet de 16, 17 ou 20 mm, et un haut de filet de 22, 24 ou 27 mm, et un pas de 6, 8 ou 9 mm.

La première portion filetée 220 présente un diamètre maximum D201 par rapport à l'axe longitudinal X-X, ce diamètre correspondant typiquement au diamètre d'un cylindre de révolution tangent aux sommets des filets de la première portion filetée 220. Le diamètre D201 est typiquement égal à 22 mm, ou plus généralement compris entre 16 mm et 30 mm, ou par exemple entre 20 mm et 24 mm.

Dans l'exemple illustré, la première portion filetée 220 forme une extrémité libre 202 de l'élément de fixation 200 avec une section plate selon un plan perpendiculaire à l'axe longitudinal X-X.

La première portion filetée 220 présente typiquement une longueur selon la direction axiale comprise entre 50 mm et 120 mm, par exemple entre 50 mm et 110 mm, ou plus précisément entre 60 et 100 mm, ou encore entre 70 mm et 90 mm, ou par exemple égale à 80 mm.

Le collet 230 présente une forme cylindrique de révolution de diamètre D203 autour de l'axe longitudinal X-X. Le collet 230 présente un diamètre D203 est strictement supérieur à D201, par exemple tel que D203 > 1,3 D201, ou encore D203 > 1,5 D201.

Le diamètre D203 est typiquement compris entre 30 mm et 60 mm, ou encore entre 35 mm et 50 mm, ou plus précisément entre 35 mm et 45 mm, ou par exemple égal à 40 mm.

Le collet 230 présente typiquement une longueur Lc selon la direction axiale, typiquement comprise entre 10 mm et 30 mm, ou par exemple entre 12 mm et 20 mm, par exemple égale à 15 mm.

Une section d'espacement 260 est formée à la suite du collet 230. La section d'espacement 260 est typiquement cylindrique de révolution autour de l'axe longitudinal X-X. Elle présente un diamètre D206 typiquement compris entre 16 et 30 mm, par exemple entre 20 et 25 mm, ou encore entre 22 et 23 mm, ou par exemple égal à 22,5 mm. Le diamètre D206 est tel que D206 < D203.

La section d'espacement 260 présente typiquement une longueur selon la direction axiale, typiquement comprise entre 50 mm et 100 mm, ou par exemple entre 60 mm et 90 mm, ou encore entre 60 et 80 mm, par exemple égale à 70 mm.

L'élément de fixation 200 comprend ensuite une seconde portion filetée 250.

La seconde portion filetée présente typiquement un filetage de type M20x2,5 selon la norme ISO.

La seconde portion filetée 250 présente un diamètre maximum D202 par rapport à l'axe longitudinal X-X, ce diamètre correspondant typiquement au diamètre d'un cylindre de révolution tangent aux sommets des filets de la seconde portion filetée 250.

La seconde portion filetée 250 présente typiquement une longueur selon l'axe longitudinal X-X comprise entre 100 et 150 mm, ou encore entre 110 et 140 mm, ou par exemple entre 120 et 140 mm, ou par exemple égale à 130 mm.

L'extrémité distale 204 de l'élément de fixation 202 est ici formée par un écrou 240. Cet écrou 240 a alors typiquement une section de polygone inscrit dans un cercle de diamètre D206 tel que D206 < D202.

Dans l'exemple illustré, la transition entre la première portion filetée 220 et le collet 230, et la liaison entre le collet 230 et la section d'espacement 260 est formée par un congé, typiquement avec un rayon compris entre 5 et 10mm, ou par exemple égal à 8mm. On comprend que le rayon du congé est adapté en fonction des dimensions des différentes sections de l'élément de fixation 200. De tels congés sont optionnels, et permettent d'améliorer la tenue mécanique de l'élément de fixation en évitant la formation de concentration de contraintes dans des zones de rupture entre des diamètres différents.

L'élément de fixation 200 tel que présenté permet de réaliser une fonction similaire à celui déjà représenté en référence à la figure 1. La section d'espacement 260 permet d'assurer un espacement entre un tronc d'arbre dans lequel l'élément de fixation 200 est inséré et des éléments fixés sur la seconde portion filetée 250, notamment pour garantir un espace suffisant pour la croissance de l'arbre.

Les éléments de fixation tel que proposé peuvent être employés pour la fixation de différentes structures dans des supports en bois tels que des arbres. On peut notamment citer comme exemples de structures des plates formes ou éléments de parcours aventure ou accrobranche, des cabanes, des systèmes de ligne de vie ou de tyroliennes.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Elément de fixation (1) adapté pour être partiellement inséré dans un arbre, comprenant un corps (10) s'étendant selon une direction longitudinale définie par un axe longitudinal (X-X),
ledit corps (10) comprenant successivement, depuis une extrémité proximale (12) vers une extrémité distale (14) selon la direction longitudinale :
- une première portion filetée (20), adaptée pour être insérée dans un tronc d'arbre,
- un collet (30),
- un écrou (40),
- une seconde portion filetée (50),
dans lequel
- la première portion filetée (20) et la seconde portion filetée (50) présentent des diamètres maximums D1 et D2 respectivement par rapport à l'axe longitudinal,
- le collet (30) présente une forme cylindrique de révolution de diamètre D3 selon l'axe longitudinal, tel que D3 > 1,3 D1, et D3 > 1,3 D2, et une longueur Lc selon la direction longitudinale comprise entre 30 mm et 90 mm,
- l'écrou (40) présente une section selon un plan perpendiculaire à l'axe longitudinal (X-X) inscrite dans un polygone régulier, ledit polygone régulier étant inscrit dans un cercle de diamètre D4, tel que D4 < D3, et D4 > D2,
- ledit élément de fixation (1) étant réalisé en une seule pièce.

2. Elément de fixation (1) selon la revendication 1, dans lequel les diamètres D1 et D3 sont compris entre 15 et 40 mm.

3. Elément de fixation (1) selon l'une des revendications 1 ou 2, comprenant une première portion de transition (23) interposée entre la première portion filetée (20) et le collet (30), la première portion de transition (23) formant un congé.

4. Elément de fixation (1) selon l'une des revendications 1 à 3, comprenant une seconde portion de transition (45) interposée entre l'écrou (40) et la seconde portion filetée (50), la seconde portion de transition (45) formant un congé.

5. Elément de fixation (1) selon l'une des revendications 1 à 4, dans lequel les diamètres D3 et D4 sont tels que D4 < 0,8 D3.

6. Elément de fixation (1) selon l'une des revendications 1 à 5, dans lequel la première portion filetée (20) présente un filetage de type bois, avec un fond de filet de 16, 17 ou 20 mm, un haut de filet de 22, 24 ou 27 mm, et un pas de 6, 8 ou 9 mm.

7. Elément de fixation (1) selon l'une des revendications 1 à 6, dans lequel la seconde portion filetée (50) présente un filetage de type M22-ISO.

8. Elément de fixation (1) selon l'une des revendications 1 à 7, formé en acier ou en acier inoxydable, par exemple en acier inoxydable 303/304 ou en acier galvanisé, ou en acier s355 avec une résistance à la rupture en traction supérieure ou égale à 500 MPa.

9. Elément de fixation (1) selon l'une des revendications 1 à 8, dans lequel le collet (30) comprend une rainure (34) s'étendant sur sa périphérie, la rainure (34) s'étendant à une distance d'une extrémité proximale du collet comprise entre 0,2 et 0,5 Lc, où Lc est la longueur du collet mesurée selon l'axe longitudinal (X-X).

10. Elément de fixation (1) selon l'une des revendications 1 à 9, dans lequel l'écrou (40) présente une section selon un plan perpendiculaire à l'axe longitudinal (X-X) définissant un polygone régulier dont les sommets ont été tronqués.

## Patentansprüche

1. Befestigungselement (1), das dazu geeignet ist, teilweise in einen Baum eingesetzt zu werden, umfassend einen Körper (10), der sich in einer Längsrichtung erstreckt, die durch eine Längsachse (X-X) definiert ist,
wobei der Körper (10) nacheinander von einem proximalen Ende (12) bis zu einem distalen Ende (14) in der Längsrichtung umfasst:
- einen ersten Gewindeabschnitt (20), der dazu geeignet ist, in einen Baumstamm eingesetzt zu werden,
- einen Kragen (30),
- eine Mutter (40),
- einen zweiten Gewindeabschnitt (50),
wobei
- der erste Gewindeabschnitt (20) und der zweite Gewindeabschnitt (50) jeweils die maximalen Durchmesser D1 und D2 im Verhältnis zur Längsachse aufweisen,
- der Kragen (30) eine rotationszylindrische Form mit einem Durchmesser D3 entlang der Längsachse, so dass D3 > 1,3 D1, und D3 > 1,3 D2, und eine Länge Lc in der Längsrichtung, die zwischen 30 mm und 90 mm liegt, aufweist,
- die Mutter (40) einen Querschnitt in einer Ebene, die zur Längsachse (X-X) rechtwinklig steht, der in einem regelmäßigen Vieleck einbeschrieben ist, aufweist, wobei das regelmäßige Vieleck in einem Kreis mit einem Durchmesser D4 einbeschrieben ist, so dass D4 < D3, und D4 > D2,
- wobei das Befestigungselement (1) einstückig ausgebildet ist.

2. Befestigungselement (1) nach Anspruch 1, wobei die Durchmesser D1 und D3 zwischen 15 und 40 mm liegen.

3. Befestigungselement (1) nach einem der Ansprüche 1 oder 2, umfassend einen ersten Übergangsabschnitt (23), der zwischen dem ersten Gewindeabschnitt (20) und dem Kragen (30) eingeschoben ist, wobei der erste Übergangsabschnitt (23) eine Ausrundung bildet.

4. Befestigungselement (1) nach einem der Ansprüche 1 bis 3, umfassend einen zweiten Übergangsabschnitt (45), der zwischen der Mutter (40) und dem zweiten Gewindeabschnitt (50) eingeschoben ist, wobei der zweite Übergangsabschnitt (45) eine Ausrundung bildet.

5. Befestigungselement (1) nach einem der Ansprüche 1 bis 4, wobei die Durchmesser D3 und D4 derart sind, dass D4 < 0,8 D3.

6. Befestigungselement (1) nach einem der Ansprüche 1 bis 5, wobei der erste Gewindeabschnitt (20) ein Gewinde vom Typ Holzgewinde aufweist, mit einem Gewindegrund von 16, 17 oder 20 mm, einem Gewindeoberteil von 22, 24 oder 27 mm und einer Steigung von 6, 8 oder 9 mm.

7. Befestigungselement (1) nach einem der Ansprüche 1 bis 6, wobei der zweite Gewindeabschnitt (50) ein Gewinde vom Typ ISO M22 aufweist.

8. Befestigungselement (1) nach einem der Ansprüche 1 bis 7, das aus Stahl oder rostfreiem Stahl gebildet ist, beispielsweise aus rostfreiem Stahl 303/304 oder aus galvanisiertem Stahl, oder aus s355-Stahl mit einer Zugfestigkeit größer oder gleich 500 MPa.

9. Befestigungselement (1) nach einem der Ansprüche 1 bis 8, wobei der Kragen (30) eine Nut (34) umfasst, die sich auf seiner Peripherie erstreckt, wobei sich die Nut (34) in einem Abstand von einem proximalen Ende des Kragens aus, die zwischen 0,2 und 0,5 Lc liegt, erstreckt, wobei Lc die Länge des Kragens ist, die entlang der Längsachse (X-X) gemessen wird.

10. Befestigungselement (1) nach einem der Ansprüche 1 bis 9, wobei die Mutter (40) einen Querschnitt in einer Ebene, die zur Längsachse (X-X) rechtwinklig steht, aufweist, der ein regelmäßiges Vieleck definiert, dessen Spitzen abgeschnitten wurden.

## Claims

1. A fixing element (1) adapted to be partially inserted into a shaft, comprising a body (10) extending along a longitudinal direction defined by a longitudinal axis (X-X),
said body (10) comprising successively, from a proximal end (12) to a distal end (14) along the longitudinal direction:
- a first threaded portion (20), adapted for insertion into a shaft frustum,
- a flange (30),
- a nut (40),
- a second threaded portion (50),
wherein
- the first threaded portion (20) and the second threaded portion (50) have maximum diameters D1 and D2 respectively with respect to the longitudinal axis,
- the flange (30) has a cylindrical shape of revolution with a diameter D3 along the longitudinal axis, such that D3 > 1.3 D1, and D3 > 1.3 D2, and a length Lc along the longitudinal direction comprised between 30 mm and 90 mm,
- the nut (40) has a section along a plane perpendicular to the longitudinal axis (X-X) inscribed in a regular polygon, said regular polygon being inscribed in a circle with a diameter D4, such that D4 < D3, and D4 > D2,
- said fixing element (1) being made in one piece.

2. The fixing element (1) according to claim 1, wherein the diameters D1 and D3 are comprised between 15 and 40 mm.

3. The fixing element (1) according to any of claims 1 or 2, comprising a first transition portion (23) interposed between the first threaded portion (20) and the flange (30), the first transition portion (23) forming a fillet.

4. The fixing element (1) according to any of claims 1 to 3, comprising a second transition portion (45) interposed between the nut (40) and the second threaded portion (50), the second transition portion (45) forming a fillet.

5. The fixing element (1) according to any of claims 1 to 4, wherein the diameters D3 and D4 are such that D4 < 0.8 D3.

6. The fixing element (1) according to any of claims 1 to 5, wherein the first threaded portion (20) has a wood type threading, with a thread root of 16, 17 or 20 mm, a thread top of 22, 24 or 27 mm, and a pitch of 6, 8 or 9 mm.

7. The fixing element (1) according to any of claims 1 to 6, wherein the second threaded portion (50) has an M22-ISO type threading.

8. The fixing element (1) according to any of claims 1 to 7, formed of steel or stainless steel, for example 303/304 stainless steel or galvanized steel, or s355 steel with a tensile strength greater than or equal to 500 MPa.

9. The fixing element (1) according to any of claims 1 to 8, wherein the flange (30) comprises a slot (34) extending around its periphery, the slot (34) extending at a distance from a proximal end of the flange comprised between 0.2 and 0.5 Lc, where Lc is the length of the flange measured along the longitudinal axis (X-X).

10. The fixing element (1) according to any of claims 1 to 9, wherein the nut (40) has a section along a plane perpendicular to the longitudinal axis (X-X) defining a regular polygon whose vertices have been truncated.
